# EUROPEAN PATENT SPECIFICATION

(11) **EP 1 569 412 B1**
(45) Date of publication and mention of the grant of the patent: **31.12.2008**
(21) Application number: 05003735.7
(22) Date of filing: 22.02.2005
(51) Int. Cl.: H04L 29/06

(54) **Dynamic address allocation and location registration**
Dynamische Adresszuweisung und Ortsregistrierung
Attribution d'adresses et régistration de location

(30) Priority: 24.02.2004 JP 2004048575
(43) Date of publication of application: 31.08.2005
(73) Proprietor: NTT DoCoMo, Inc., Tokyo 100-6150 (JP)
(72) Inventor: Sakaguchi, Takuji, Intell. Prop., Dept., 2-chome Chuiyoda-ku Tokyo 100-6150 (JP); Okagawa, Takatoshi, Intell. Prop., Dept., 2-chome Chuiyoda-ku Tokyo 100-6150 (JP)
(74) Representative: Sparing Röhl Henseler Patentanwälte European Patent Attorneys

(56) References cited:
- WO-A-03/096628
- DROMS (ED) R ET AL: "Dynamic Host Configuration Protocol for IPv6 (DHCPv6) draft-ietf-dhc-dhcpv6-28.txt" IETF STANDARD-WORKING-DRAFT, INTERNET ENGINEERING TASK FORCE, IETF, CH, vol. dhc, no. 28, 2 November 2002 (2002-11-02), XP015001651 ISSN: 0000-0004
- OKANOUE K ET AL: "IP MOBILITY SUPPORT WITH IP-SQUARED (IP2) ENCAPSULATION TECHNIQUE" IEICE TRANSACTIONS ON COMMUNICATIONS, INSTITUTE OF ELECTRONICS INFORMATION AND COMM. ENG. TOKYO, JP, vol. 80-B, no. 8, August 1997 (1997-08), pages 1198-1206, XP000723089 ISSN: 0916-8516
- MANHEE JO ET AL: "Addresses interchange procedure in mobility management architecture for IP-based IMT network platform (IP<2>)" TELECOMMUNICATIONS, 2003. ICT 2003. 10TH INTERNATIONAL CONFERENCE ON FEB. 23 - MAR. 1, 2003, PISCATAWAY, NJ, USA,IEEE, vol. 1, 23 February 2003 (2003-02-23), pages 118-123, XP010637794 ISBN: 0-7803-7661-7
- MCAULEY A J ET AL: "Self-configuring networks" MILCOM 2000. 21ST CENTURY MILITARY COMMUNICATIONS CONFERENCE PROCEEDINGS 22-25 OCTOBER 2000, PISCATAWAY, NJ, USA,IEEE, vol. 1, 22 October 2000 (2000-10-22), pages 315-319, XP010532606 ISBN: 0-7803-6521-6

## Description

The present invention relates to an address dynamic assignment system and an address dynamic assignment method for dynamically assigning an IP (Internet Protocol) host address to a mobile node.

In general, a mobile communication system has an identifier checkable by a user such as a telephone number assigned to a mobile node, where the mobile nodes mutually establish communication by using the identifiers. A server for managing a user profile manages current whereabouts of the mobile node by using the telephone number as the identifier.

In recent years, there is a proposed technique whereby, on an IP² (IP based IMT Network Platform), an IP host address (hereafter, referred to as "IPha") plays a role of information for identifying the mobile node conventionally played by the telephone number. Technical contents thereof are described in specifications of JP2004-112727A, JP2004-159112A and JP2005-057356A.

According to the contents described in these specifications, a location manager (hereafter, referred to as "LM") for managing location information on a mobile node (hereafter, referred to as "MN") stores a relation between the IPha assigned to the MN and an access router (hereafter, referred to as "AR") having a link to the MN established. According to these documents, the IPha set to the MN is only considered to be fixedly assigned, as in the case of being set by a service order (SO) from a provider.

To dynamically assign the IPha to the MN, it is realizable by using existing techniques such as a DHCPv6 server described in "RFC3315 Dynamic Host Configuration Protocol for IPv6 (DHCPv6)" and a Dynamic DNS described in "RFC2136 Dynamic Updates in the Domain Name System (DNS UPDATE)."

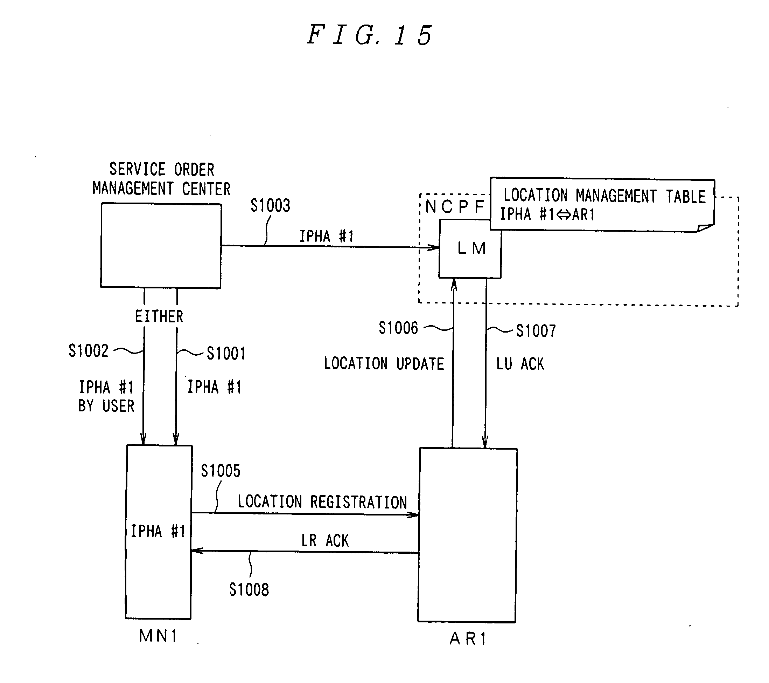

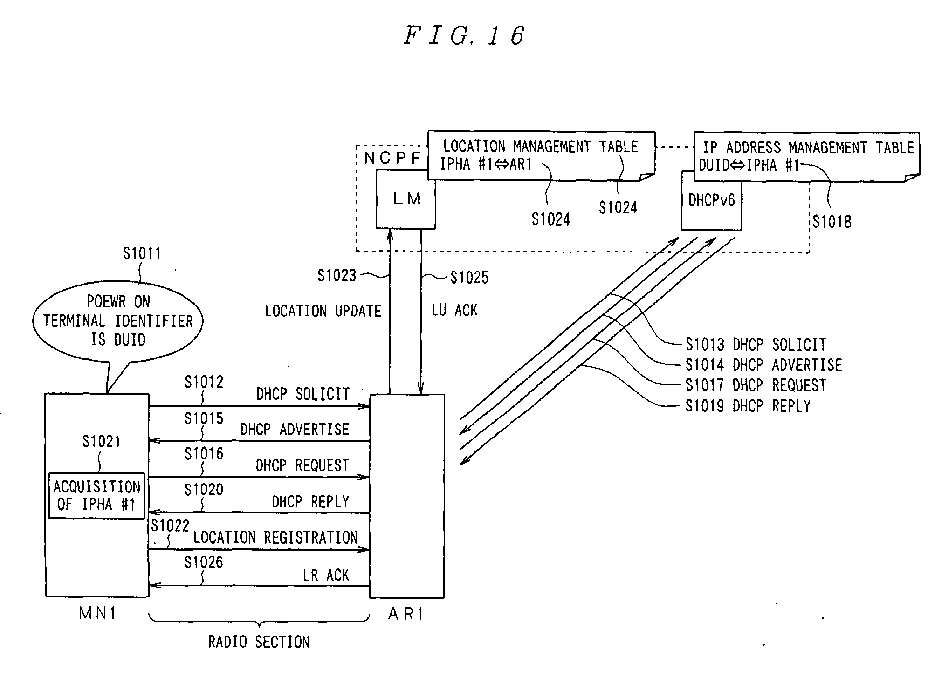

A problem of a conventional IPha assignment technique will be described by using FIGS. 15 and 16.

FIG. 15 shows the technique for fixedly assigning an IPha #1 to an MN1. As shown in FIG. 15, first, the IPha #1 is assigned according to an instruction from a service order management server (S1001). The MN1 is connected to the service order management server to obtain the IPha #1. The IPha #1 is fixedly set to the MN1.

Or else, the MN1 obtains the IPha #1 on some notification from the service order management server, and the IPha #1 is fixedly set to the MN1 by the user (S1002).

On the notification from the service order management server, the LM fixedly registers (sets) the IPha #1 assigned to the MN1 with a location management table (S1003).

After the IPha #1 is registered with the MN1 and LM, a location registration procedure on the IP² is performed as follows.

First, if power of MN1 is turned on (S1004), an L2 link is set between an AR1 and the MN1. The MN1 sends a location registration (LR) including the IPha #1 set to the MN1 to the AR1 (S1005).

The AR1 sends a location update (LU) including the IPha #1 included in the LR received from the MN1 to the LM (S1006).

On receiving the LU from the AR1, the LM registers the identifier of the AR1 which is a source of the LU by associating it with the IPha #1 already registered with the location management table. And the LM sends a location update acknowledgement (LUAck) to the AR1 (S1007).

The AR1 sends a location registration acknowledgement (LRAck) to the MN1 (S1008).

In the case of changing the IPha of which the MN1 is notified by the service order management server then, there is a need to access the service order management server. To change the IPha set to the MN1, the user cannot help taking the trouble of paying a visit to a window of a company managing the service order management server or making a phone call to an NW (network) provider to request a change of the IPha. In this technique, an IPha assignment procedure and the location registration procedure are performed as independent procedures.

Next, a dynamic IPha assignment method adopting an existing technique will be described by referring to FIG. 16. Here, the DHCPv6 server is used as an example of an IP address management apparatus. And a terminal identifier of the MN1 of a DHCP is a DUID (DHCP Unique Identifier for a DHCP).

First, on turning on the power of the MN1, an L2 link is set between the AR1 and the MN1 (S1011). As the MN1 has no IPha set to itself, it sends a DHCP SOLICIT to the DHCP server in order to acquire the IPha (S1012).

The AR1 transfers the DHCP SOLICIT received from the MN1 to the DHCPv6 server (S1013). On receiving a DHCP ADVERTISE from the DHCPv6 server thereafter (S1014), the AR1 transfers it to the MN1 (S1015).

The MN1 receives the DHCP ADVERTISE from the AR1, and sends a DHCP REQUEST to the AR1 (S1016). The AR1 transfers the DHCP REQUEST from the MN1 to the DHCPv6 server (S1017). The DHCPv6 server registers the DUID which is the terminal identifier of the MN1 and the IPha #1 assigned with an IP address management table (S1018). The DHCPv6 server sends a DHCP REPLY including the IPha #1 (S1019). On receiving the DHCP REPLY from the DHCPv6 server, the AR1 transfers it to the MN1 (S1020). The MN1 receives the DHCP REPLY from the AR1, and acquires the IPha #1 (S1021).

After setting the IPha #1 to the MN1, the MN1 sends to the AR1 the LR including the IPha #1 assigned (S1022). On receiving the LR from the MN1, AR1 sends the LU to the LM (S1023). After completing the location registration (S1024), the LM sends the LUAck to the AR1 (S1025). On receiving the LUAck, the AR1 sends the LRAck to the MN1 (S1026). The MN1 receives the LRAck from the AR1, and the location registration is completed.

According to this technique, the AR1 performs only a relay between the MN1 and the DHCPv6 server, and so acquisition of the IPha is performed between the MN1 and the DHCPv6 server. According to this technique, an IPha assignment procedure and the location registration procedure are performed as independent procedures. For this reason, a large number of messages are sent and received between the MN1 and the AR1 so as to consequently put load on a radio section.

Thus, a message amount is redundant in the case of dynamic IPha assignment by application of the existing technique. As for fixed IPha assignment, the IPha is assumedly changed by the SO in order to avoid a malicious attack to the MN which may arise due to the fixed IPha so that a burden on the user is significant.

JP2001-186573A discloses another technique for dynamically assigning the IP address. According to JP2001-186573A, a radio base station has the IP address to be assigned to the mobile node from the DHCP server in advance. And when the mobile node sends an IP address assignment request, the radio base station assigns and sends one of the IP addresses which it has to the mobile node.

A technique disclosed in JP2001-186573A is intended to have an IP address to be assigned to a mobile node held in advance by a radio base station so as to reduce time from a request for assignment of the IP address made by the mobile node until acquisition thereof. For this reason, no consideration is given to a location registration procedure of the mobile node, and an IP address assignment procedure and the location registration procedure are performed as independent procedures. Therefore, in the case of considering the entire message amount of IP address assignment and location registration, the technique in JP2001-186573A is not necessarily the one capable of securely reducing the message amount in a radio section.

Known from WO 03/096628 A is an address dynamic assignment system and an address dynamic assignment method according to the preamble of claims 1 and 3, respectively.

An object of the invention is to provide an address dynamic assignment system and an address dynamic assignment method, respectively, for dynamically assigning terminal identification address information for identifying the mobile node without putting load on the radio section by reducing the message amount in the radio section.

To solve the problem, the invention provides an address dynamic assignment system including an address management apparatus for managing terminal identification address information assigned for the sake of uniquely identifying a mobile node on a mobile communication network, a relay apparatus for relaying communication of the mobile node and a location manager for managing location information about the mobile node, wherein the relay apparatus has address acquisition necessity determination means for, when receiving a location registration for requesting registration of the location information from the mobile node, determining whether or not there is a need to acquire the terminal identification address information to be assigned to the mobile node based on address acquisition necessity information included in the location registration; address acquisition proxy means for acquiring the terminal identification address information from the address management apparatus in the case where the address acquisition necessity determination means determines that there is a need to acquire the terminal identification address information; post-address-acquisition location registration means for sending to the location manager a location update for registering a location including the terminal identification address information acquired by the address acquisition proxy means; and assigned address notification means for sending back to the mobile node a location registration acknowledgement including the terminal identification address information acquired by the address acquisition proxy means.

On receiving the location registration from the mobile node, the relay apparatus acquires the terminal identification address information to be assigned to the mobile node from the address management apparatus in place of the mobile node according to the address acquisition necessity information included in the location registration, transfers to the location manager the location update including the acquired terminal identification address information and sends back to the mobile node the location registration acknowledgement including the acquired terminal identification address information. For this reason, the mobile node can acquire the terminal identification address information just by sending and receiving a signal for the location registration between the mobile node and the relay apparatus. Thus, it is possible to reduce the message amount in the radio section between the mobile node and the relay apparatus so as to dynamically assign the terminal identification address information to the mobile node without putting load on the radio section.

The relay apparatus also determines whether or not there is a need to acquire the terminal identification address information to be assigned to the mobile node according to the terminal identification address information assigned to the mobile node included in the location registration received from the mobile node. Therefore, it is possible to acquire the terminal identification address information only when necessary. Even in the case of having no terminal identification address information assigned, the mobile node can send the location registration so as to acquire the terminal identification address information and also register the location.

Preferably, the relay apparatus further comprising address validity confirmation means for sending a message for confirming validity of the terminal identification address information assigned to the mobile node to an address management apparatus managing the terminal identification address information, wherein: in the case where the address validity confirmation means confirms that the terminal identification address information about the mobile node is not valid, the terminal identification address information to be assigned to the mobile node is acquired.

According thereto the relay apparatus confirms the validity of the terminal identification address information assigned to the mobile node, and acquires the terminal identification address information to be assigned to the mobile node in the case of confirming that it is invalid. Therefore, it is possible to prevent invalid terminal identification address information from being sent to and registered with the location manager. The relay apparatus can also assign newly acquired valid terminal identification address information to the mobile node having sent the invalid terminal identification address information. For this reason, it is possible to prevent the same terminal identification address information from being duplicately assigned to multiple mobile nodes.

The invention also provides an address dynamic assignment method for assigning terminal identification address information for uniquely identifying a mobile node on a mobile communication network to the mobile node, comprising a request sending step in which the mobile node sends a location registration including address assignment necessity information representing whether or not there is a need to assign the terminal identification address information to its own node; an address acquisition necessity determination step in which a relay apparatus determines whether or not there is a need to acquire the terminal identification address information to be assigned to the mobile node based on the address assignment necessity information included in the location registration received in the request sending step; a location registration step in which, if determined that there is a need to acquire the terminal identification address information in the address acquisition necessity determination step, the relay apparatus sends a location update for registering the location including the acquired terminal identification address information to a location manager for registering the location after acquiring the terminal identification address information, and if determined that there is no need to acquire the terminal identification address information, it sends the location update including the terminal identification address information currently assigned to the mobile node to the location manager without acquiring the terminal identification address information to be assigned to the mobile node; and an assigned address notification step in which the relay apparatus sends back to the mobile node a location registration acknowledgement including the terminal identification address information to be assigned to the mobile node acquired in the location registration step.

As regards the address dynamic assignment method, the mobile node only sends the location registration to register the location irrespective of whether or not there is a need to assign the terminal identification address information to its own node. And the mobile node can receive the location registration acknowledgement including the terminal identification address information in the case where there is a need to assign the terminal identification address information. For this reason, according to the address dynamic assignment method, it is possible, in the radio section between the mobile node and the relay apparatus, to register the location and assign the terminal identification address information to the mobile node just by sending and receiving the location registration and the location registration acknowledgement.

The relay apparatus determines whether or not there is a need to acquire a terminal identification address information to be assigned to the mobile node based on the information included in the location registration received from the mobile node, and acquires the terminal identification address information in place of the mobile node if determined that there is a need to acquire it. Furthermore, the relay apparatus transfers the location update including the acquired terminal identification address information to the location manager, and sends back to the mobile node the location registration acknowledgement including the acquired terminal identification address information. For this reason, it is possible to fuse together the terminal identification address information acquisition procedure and the location registration procedure of the mobile node and perform them as a series of processes, and the relay apparatus also acquires the terminal identification address information in place of the mobile node. Therefore, it is possible to reduce the message amount in the radio section between the mobile node and the relay apparatus. Thus, it is possible to dynamically assign the terminal identification address information to the mobile node without putting load on the radio section.

In conjunction with the dynamic assignment of the terminal identification address information, the address management apparatus and location manager can delete the terminal identification address information and evaluate the validity thereof without increasing the message amount in the radio section so as to avoid the duplication of the terminal identification address information managed by the apparatuses.

The invention will now be explained in connection with embodiments illustrated in the accompanying drawings.
FIG. 1 is a block diagram showing an overall configuration of an address dynamic assignment system of an embodiment of the invention.
FIG. 2 is a block diagram showing a functional configuration of an AR according to the embodiment.
FIG. 3 is a block diagram showing the functional configuration of a location manager according to the embodiment.
FIG. 4 is a block diagram showing the functional configuration of the LM according to the embodiment.
FIG. 5 is a diagram showing a procedure fusing together IPha dynamic assignment and location registration according to the embodiment.
FIG. 6 is a diagram showing a location registration procedure after acquiring the IPha according to the embodiment.
FIG. 7 is a diagram showing a reacquisition procedure led by a NW after acquiring the IPha according to the embodiment (updating a location management table on the occasion of a previous IPha deletion request message from a DHCPv6 server).
FIG. 8 is a diagram showing the reacquisition procedure led by the NW after acquiring the IPha according to the embodiment (updating the location management table on the occasion of sending previous IPha information from an MN to the AR).
FIG. 9 is a diagram showing the reacquisition procedure led by the NW after acquiring the IPha according to the embodiment (updating the location management table on the occasion of expiration of a timer on the LM).
FIG. 10 is a diagram showing the reacquisition procedure led by the MN after acquiring the IPha according to the embodiment (updating the location management table on the occasion of a previous IPha deletion request message from a DHCPv6 server).
FIG. 11 is a diagram showing the reacquisition procedure led by the MN after acquiring the IPha according to the embodiment (updating the location management table on the occasion of sending previous IPha information from the MN to the AR).
FIG. 12 is a diagram showing the reacquisition procedure led by the MN after acquiring the IPha according to the embodiment (updating the location management table on the occasion of expiration of a timer on the LM).
FIG. 13 is a diagram showing a procedure for confirming IPha validity according to the embodiment (case of using a valid IPha).
FIG. 14 is a diagram showing the procedure for confirming IPha validity according to the embodiment (case of using an invalid IPha).
FIG. 15 is a diagram showing conventional IPha fixed assignment procedure and location registration procedure.
FIG. 16 is a diagram showing conventional IPha dynamic assignment procedure and location registration procedure.

### <1. Configuration>

### <1.1 Overall configuration>

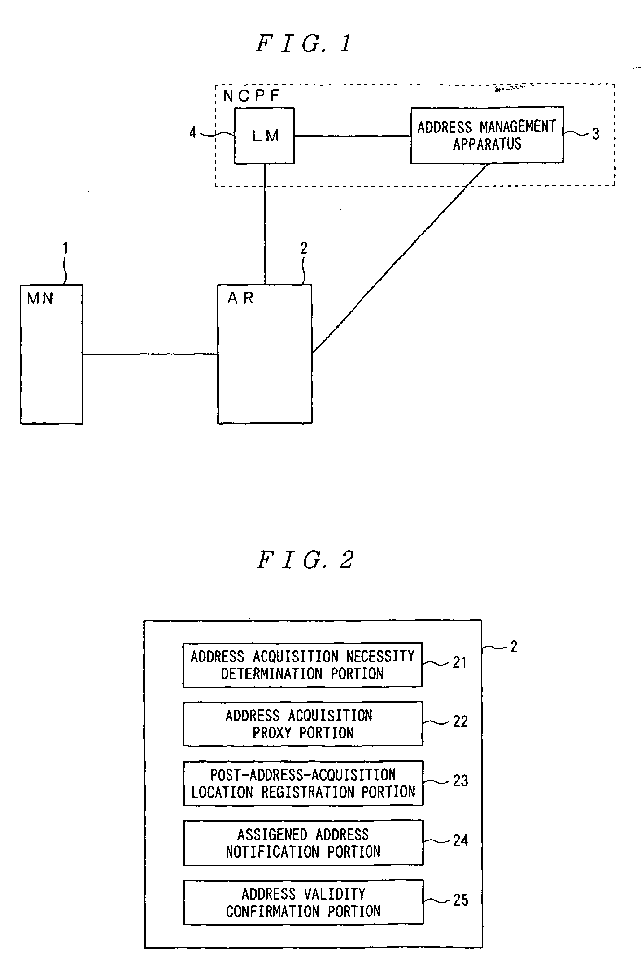

FIG. 1 is a block diagram showing an overall configuration of an address dynamic assignment system according to an embodiment of the present invention. The address dynamic assignment system is comprised of a mobile node (hereafter, referred to as an "MN") 1, an access router (hereafter, referred to as an "AR") 2 connected to the MN 1 and relaying sending and reception of a message of the MN 1, an IP address management apparatus 3 for managing an IPha which is terminal identification address information assigned to uniquely identify the MN 1 on a mobile communication network and a location manager (hereafter, referred to as an "LM") 4 for managing location information on the MN 1. The address management apparatus 3 and LM 4 configure an NCPF (Network control Platform) for exerting network control on an IP². FIG. 1 shows only one MN 1 and AR 2. However, there are a plurality of them in reality.

The MN 1, AR 2, IP address management apparatus 3 and LM 4 have a general computer hardware configuration, which is comprised of a CPU (Central Processing Unit), a memory and a communication interface. The memory of each of these apparatuses stores a program for implementing functions characteristic of the present invention.

### <1.2 AR>

Next, the AR 2 will be described. The AR 2 is an apparatus for acquiring the IPha to be assigned to the MN 1 and registering the location of the MN 1 as a series of processes. When performing the process for acquiring the IPha of the MN 1, the AR 2 functions as a proxy server for acquiring the IPha. A functional configuration of the AR 2 will be described. The CPU of the AR 2 executes the program stored in the memory of the AR 2 so that the functions shown in FIG. 2 will be implemented on the AR 2.

When receiving a location registration (LR) for requesting registration of location information from the MN 1, an address acquisition necessity determination portion 21 determines whether or not there is a need to acquire the IPha to be assigned to the MN 1 based on IPha information included in the location registration.

Here, the "IPha information" included in the location registration is the information to be set in a specific area in the location registration. The IPha information is address acquisition necessity information representing whether or not there is a need to acquire the IPha to be assigned to the MN 1. The address acquisition necessity determination portion 21 determines that there is no need to acquire the IPha in the case where a value is set to the IPha information included in the location registration, and determines that there is a need to acquire the IPha in the case where no value is set to the Ipha information.

When the MN 1 reacquires the IPha, there are the cases where areas for setting "previous IPha information" and "new IPha information" are provided in the location registration. In these cases, the "new IPha information" plays a role of the address acquisition necessity information. The "previous IPha information" represents a request for deletion of the IPha currently assigned to the MN 1. The MN 1 sends the location registration setting the IPha currently assigned to the MN 1 as the "previous IPha information" and the "new IPha information" unset so that the MN 1 can acquire the new IPha information and delete the previous IPha information managed by the LM 4.

The method of having the address acquisition necessity information represented by the "IPha information" and "new IPha information" is just an example. For instance, it is also possible to have the information representing "to be acquired" and "not to be acquired" directly set in the location registration by the MN 1 and have this information interpreted by the address acquisition necessity determination portion 21 so as to determine whether or not there is a need to acquire the IPha.

If determined that there is a need to acquire the IPha by the address acquisition necessity determination portion 21, an address acquisition proxy portion 22 acquires the IPha to be assigned to the MN 1 from the IP address management apparatus 3 in place of the MN 1.

A post-address-acquisition location registration portion 23 generates a location update (LU) including the IPha information acquired by the address acquisition proxy portion 22, and transfers the generated location update to the LM 4. Thus, the LM 4 can associate the IPha information on the MN 1 with an identifier of the AR 2 so as to manage it as the location information on the MN 1.

An assigned address notification portion 24 generates a location registration acknowledgement (LRAck) including the IPha acquired by the address acquisition proxy portion 22 and sends it back to the MN 1.

An address validity confirmation portion 25 sends a message for confirming validity of the IPha assigned to the MN 1 to the IP address management apparatus 3.

### <1.3 IP address management apparatus>

Next, the configuration of the IP address management apparatus 3 will be described. The IP address management apparatus 3 is an apparatus for managing the IPha assigned to the MN 1. And a DHCPv6 server may be used for it for instance.

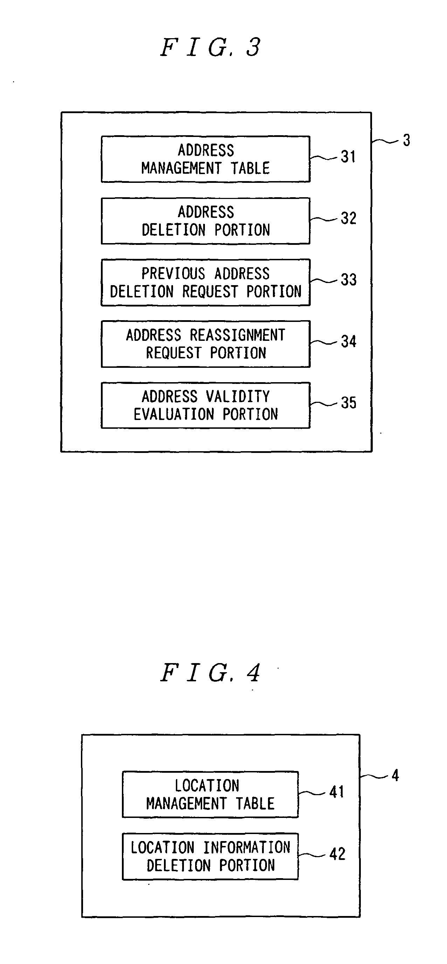

FIG. 3 shows the functions characteristic provided to the IP address management apparatus 3. An IP address management table 31 shown in FIG. 3 is provided to the memory of the IP address management apparatus 3. The IP address management table 31 has a DUID which is a terminal identifier of the MN 1 associated with the information representing the IPha assigned to the MN 1 stored therein. And the memory has the information representing a lease period of each piece of the IPha information stored therein. Here, the lease period represents a valid duration for allowing use of the IPha since it is assigned to the MN 1. The IP address management apparatus 3 comprises a timer for timing the lease period.

The following functions shown in FIG. 3 are implemented by having the program stored in the memory executed by the CPU of the IP address management apparatus 3. An address deletion portion 32 deletes the IPha associated with the information representing the valid duration when detecting elapse of the lease period stored in the IP address management table 31 on notice from the timer.

When assigning a new IPha to the MN 1, a previous address deletion request portion 33 sends to the LM 4 a request for deletion of a previous IPha assigned to the MN 1 so far.

When detecting expiration (elapse) of the lease period of a certain IPha on notice from the timer, an address reassignment request portion 34 sends address reassignment request instruction data for requesting reacquisition of a different IPha to the MN 1 to which the IPha is assigned.

When receiving a message for checking whether or not the IPha assigned to the MN 1 is valid from the AR 2, an address validity evaluation portion 35 evaluates the validity of the IPha assigned to the MN 1. To be more precise, the address validity evaluation portion 35 refers to the IP address management table 31 so as to determine whether or not the IPha assigned to the MN 1 is assigned to another MN.

### <1.4 LM>

Next, the configuration of the LM 4 will be described. FIG. 4 shows the functions characteristic of the present invention provided to the LM 4. A location management table 41 is provided to the memory of the LM 4. The location management table 41 has the location information including the IPha information assigned to the MN 1 and the information for identifying the AR 2 having sent the location update (LU) stored therein. The memory has the information representing the valid duration of each piece of the location information stored therein. The LM 4 comprises the timer for timing each valid duration.

The CPU of the LM 4 executes the program stored in the memory so that a location information deletion portion 42 shown in FIG. 4 is implemented in the LM 4.

When detecting the request for deletion of the IPha information assigned to the MN 1, the location information deletion portion 42 deletes the location information including the IPha information from the location management table 41. When the location information deletion portion 42 deletes the location information from the location management table 41, it is at least one of the case of receiving the request for deletion from the IP address management apparatus 3, the case of receiving the previous IPha information assigned to the MN 1 from the MN 1 by way of the AR 2 and the case of expiration of the valid duration timed by the timer provided to the LM 4.

### <2. Operation>

Next, operation of the configuration will be described.

Here, the MN 1 is connected under the AR 2. The DHCPv6 server is used as the IP address management apparatus 3. Hereunder, a description will be given by referring to the IP address management apparatus 3 as "DHCPv6 server 3."

### <2.1 IPha acquisition procedure when the IPha is unset>

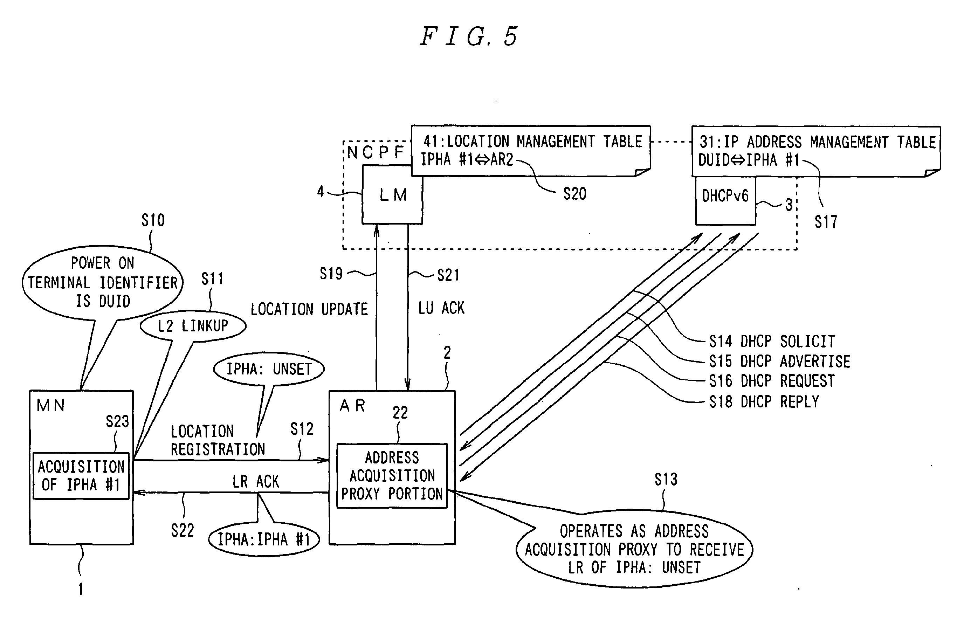

First, an IPha acquisition procedure will be described by using FIG. 5. In FIG. 5, the MN 1 starts communication under the AR 2. In this case, the IPha is unset to the MN 1 and unregistered with the LM.

If power of the MN 1 is turned on (S10), an L2 link is set between the AR 2 and MN 1 (S11). As the IPha is unset to the MN 1, the MN 1 sends to the AR 2 the location registration (LR) including the information that the IPha information is unset (S12).

The address acquisition necessity determination portion 21 of the AR 2 determines whether or not there is a need to acquire the IPha to be assigned to the MN 1 based on the IPha information included in the LR. On confirming that the IPha information included in the LR received from the MN 1 is unset, the address acquisition proxy portion 22 performs a process for acquiring the IPha for the MN 1 (S13). To be more precise, the address acquisition proxy portion 22 sends a DHCP SOLICIT to the DHCPv6 server 3 (S14), and receives a DHCP ADVERTISE as a response (S15). Next, the address acquisition proxy portion 22 sends a DHCP REQUEST to the DHCPv6 server 3 (S16).

The DHCPv6 server 3 assigns the IPha #1 as the IPha for the MN 1, and associates the DUID which is the terminal identifier of the MN 1 with the IPha #1 assigned to register them with the IP address management table 31 (S17).

The address acquisition proxy portion 22 of the AR 2 receives a DHCP REPLY including the IPha #1 (S18). Thus, the AR 2 is notified of the IPha #1 assigned for the MN 1. The post-address-acquisition location registration portion 23 of the AR 2 sends the location update (LU) including the IPha #1 to the LM 4 (S19).

On receiving the LU from the AR 2, the LM 4 registers the IPha #1 by associating it with the identifier of the AR 2 with the location management table (S20). The LM 4 sends a location update acknowledgement (LUAck) to the AR 2 (S21).

The assigned address notification portion 24 of the AR 2 sends the location registration acknowledgement (LRAck) including the IPha #1 to the MN 1 (S22).

The MN 1 receives the LRAck from the AR 2, and the acquisition of the IPha #1 is completed upon completion of the location registration (S23).

Here, if the MN 1 makes an address acquisition request to the DHCPv6 server 3 as in FIG. 16, a number of messages are required between the MN 1 and the AR 2. According to the present invention, however, it is possible to acquire the IPha on an NW side (between the AR 2 and the DHCPv6 server 3) by having the address acquisition request made by the address acquisition proxy portion 22 existing in the AR 2 in place of the MN 1 so that any message other than those necessary for the location registration between the MN 1 and the AR 2 becomes unnecessary.

### <2.2 Location registration procedure after acquisition of the IPha is completed>

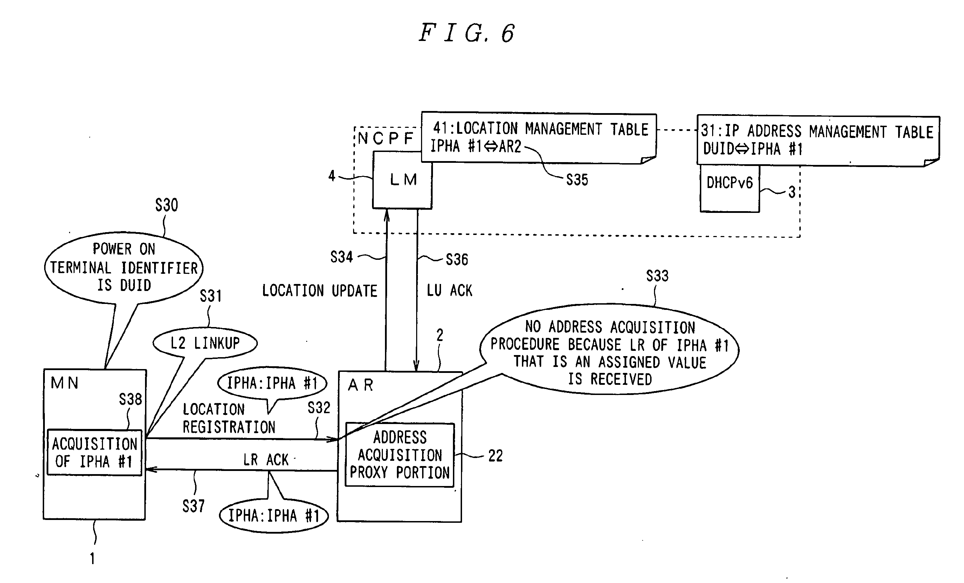

Next, the location registration procedure after acquisition of the IPha is completed will be described by using FIG. 6. Hereunder, only the procedure different from FIG. 5 will be described.

Here, it is assumed that the MN 1 has already acquired the IPha #1, and the IPha #1 is set to the MN 1. For this reason, the MN 1 sends the LR including the IPha #1 to the AR 2 (S32). The address acquisition necessity determination portion 21 of the AR 2 determines that there is no need to acquire the IPha because the IPha #1 is set in the LR (S33). For this reason, the AR 2 sends to the LM 4 the LU including the IPha #1 already assigned (S34). On receiving the LU from the AR 2, the LM 4 associates the IPha #1 and the identifier of the AR 2 with the location management table 41 and registers it as the location information (S35) so as to send the LUAck to the AR 2 (S36).

The AR 2 sends the LRAck including the IPha #1 to the MN 1 (S37). The MN 1 receives the LRAck from the AR 2, and completes the location registration (S38).

Here, in the case where the MN 1 plays a leading role in making the address acquisition request as in FIG. 16, the address acquisition cannot be managed on the NW side so that all the address acquisition requests from the MN 1 will be allowed. In the procedure shown in FIG. 6, however, the address acquisition necessity determination portion 21 of the AR 2 receives the LR from the MN 1 and determines whether or not the IPha is assigned to the MN 1 so that no wasteful address acquisition will take place.

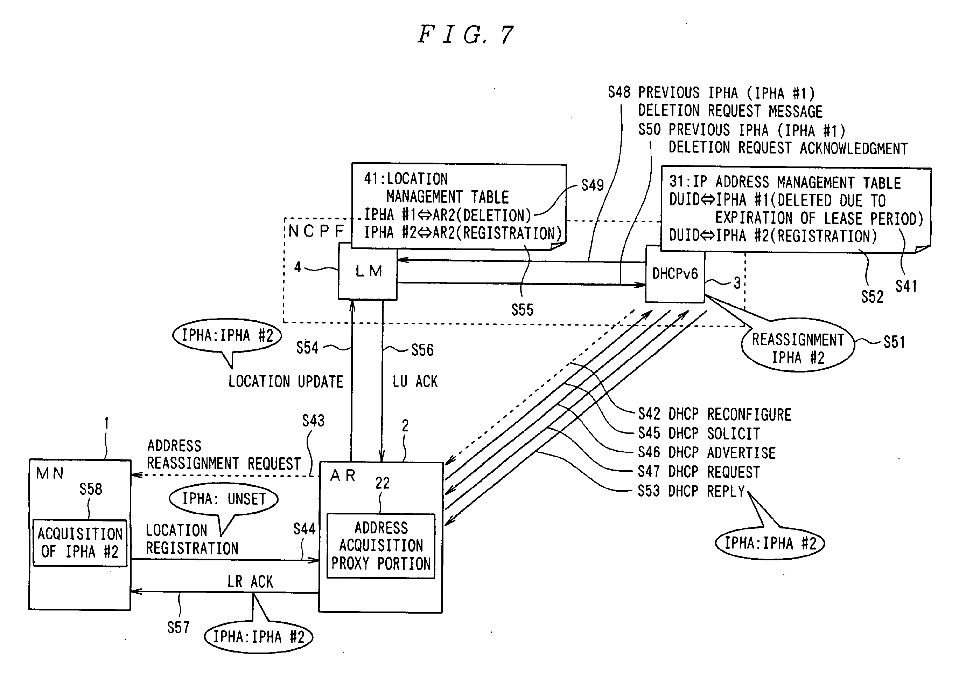

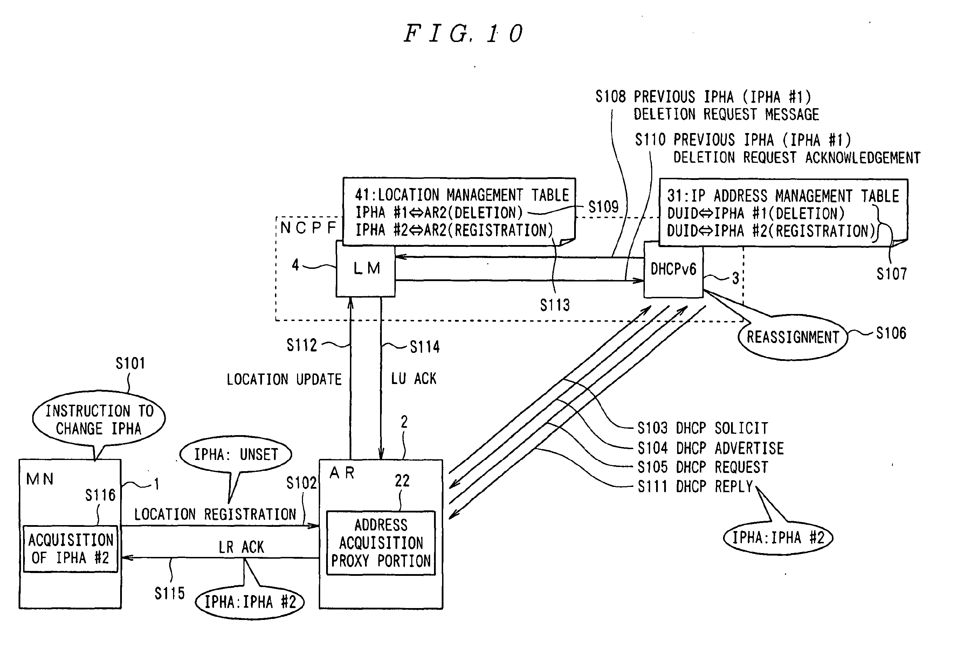

Furthermore, FIGS. 7 to 12 are used to describe that, even in the case where the MN 1 acquires the IPha and the IPha information is already set to the MN 1, the present invention is effective for the MN 1 to acquire the IPha again. FIGS. 7 to 9 are schematic diagrams as to reacquisition of the IPha led by the NW such as the DHCPv6 server 3 and LM 4, and FIGS. 10 to 12 are schematic diagrams as to the reacquisition of the IPha led by the MN 1.

### <2.3 IPha reacquisition procedure led by the NW (previous IPha deletion request of the DHCPv6 server)>

A description will be given by referring to FIG. 7 as to an IPha reacquisition procedure led by the NW in the case of resetting (changing) the IPha of the MN 1 after acquiring the IPha. Here, the LM 4 avoids managing the IPha information on the MN 1 in the location management table 41 duplicately based on a previous IPha deletion request message from the DHCPv6 server 3. The previous IPha information held by the MN 1 is the IPha #1.

First, when the DHCPv6 server 3 detects the expiration (elapse) of the lease period of the IPha #1 assigned to the MN 1, the address deletion portion 32 deletes the IPha #1 stored in the IP address management table 31 (S41). In addition, the address reassignment request portion 34 starts a program for executing a reassignment process, and sends a DHCP RECONFIGURE for requesting reacquisition of a new IPha to the MN 1 (S42).

On receiving the DHCP RECONFIGURE from the DHCPv6 server, the AR 2 sends an address reassignment request instruction to the MN 1 (S43).

On receiving the address reassignment request instruction from the AR 2, the MN 1 executes the same IPha acquisition procedure as that in FIG. 5 (S44 to S57) so as to acquire an IPha #2.

Here, a difference from the procedure in FIG. 5 is that, if the DHCPv6 server 3 receives the DHCP REQUEST from the AR 2 (S47), the previous address deletion request portion 33 of the DHCPv6 server 3 sends a previous IPha deletion request message including the IPha #1 to the LM 4 (S48).

If the LM 4 receives the previous IPha deletion request message, the location information deletion portion 42 of the LM 4 deletes the location information including the IPha #1 stored in the location management table 41 (S49). Thereafter, the LM 4 sends a deletion request acknowledgement to the DHCPv6 server 3 (S50).

Furthermore, the DHCPv6 server 3 receives the DHCP REQUEST (S47), and then assigns an IPha #2 to MN 1 (S51). The DHCPv6 server 3 associates the IPha #2 assigned with the terminal identifier DUID of the MN 1, and registers it with the IP address management table 31 (S52).

On receiving the deletion request acknowledgement from the LM 4 in S50, the DHCPv6 server 3 sends the DHCP REPLY including the IPha #2 to the AR 2 (S53).

In the case of acquiring the address as shown in FIG. 16 here, load is put on the radio section each time the address is acquired. The LM 4 has no means for deleting the IPha #1 stored in the location management table 41. As for the procedure shown in FIG. 7, however, the location information deletion portion 42 of the LM 4 can delete the previous IPha information (IPha #1) stored in the location management table 41 according to the deletion request from the previous address deletion request portion 33 of the DHCPv6 server 3. And the LM 4 can prevent the IPha information on the MN 1 from being duplicately managed in the location management table 41 in order to register new IPha information newly assigned (IPha #2) to the location management table 41.

According to this method, the MN 1 can receive an address reassignment request on the expiration of the lease period of the IPha. Therefore, it is possible to use a valid IPha irrespective of the lease period of the IPha used by the MN 1. And the AR 2 can request the reacquisition of the IPha without managing association between the MN 1 and the IPha. Furthermore, the LM 4 can uniquely manage the IPha information in the location management table 41 because it receives the previous IPha deletion request message from the DHCPv6 server 3.

### <2.4 IPha reacquisition procedure led by the NW (previous IPha deletion request from the MN)>

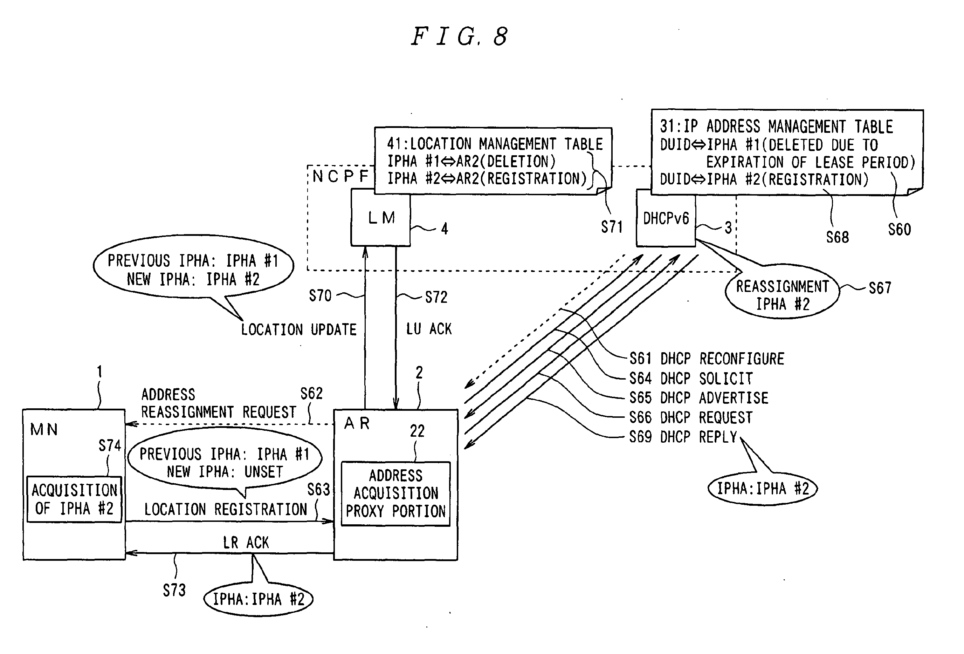

The procedure shown in FIG. 7 avoids duplication by the LM 4 in the location management table 41 on the occasion of the previous IPha deletion request message from the previous address deletion request portion 33 of the DHCPv6 server 3. As for the procedure shown in FIG. 8, a description will be given as to the case of avoiding duplicate management of the IPha in the location management table 41 of the LM 4 based on the previous IPha information from the MN 1. The previous IPha information held by the MN 1 is the IPha #1.

When the DHCPv6 server 3 detects the expiration of the lease period of the IPha #1 assigned to the MN 1, the address deletion portion 32 deletes the IPha #1 stored in the IP address management table 31 (S60). In addition, the DHCPv6 server 3 starts a program for executing a reassignment process and sends the DHCP RECONFIGURE to the AR 2 (S61).

On receiving the DHCP RECONFIGURE from the DHCPv6 server 3, the AR 2 sends the address reassignment request instruction to the MN 1 (S62).

On receiving the address reassignment request instruction from the AR 2, the MN 1 sends the LR including the previous IPha information (IPha #1) and the new IPha information (unset) to the AR 2 (S63).

When the AR 2 receives the LR from the MN 1, the address acquisition necessity determination portion 21 determines whether or not there is a need to acquire the IPha to be assigned to the MN 1. Here, the set value of the new IPha information included in the LR is unset, and so the address acquisition proxy portion 22 performs the same IPha acquisition procedure as that in FIG. 7 (S64 to S69) so as to acquire IPha #2.

Next, the post-address-acquisition location registration portion 23 of the AR 2 sends the LU including the previous IPha information (IPha #1) and the new IPha information (IPha #2) to the LM 4 (S70).

The LM 4 receives the LU from the AR 2. The location information deletion portion 42 of the LM 4 deletes the location information including the IPha #1 stored in the location management table 41 based on the previous IPha information included in the LU. At the same time, the LM 4 registers the IPha #2 based on the new IPha information included in the LU (S71). Thereafter, the LM 4 sends the LUAck to the AR 2 (S72).

The AR 2 receives the LUAck from the LM 4. The assigned address notification portion 24 of the AR 2 sends the LRAck including the IPha #2 as the IPha information to the MN 1 (S73).

The MN 1 receives the LRAck from the AR 2, and acquires the newly assigned IPha #2 included in the LRAck so as to set it to the MN 1 (S74).

Here, as with an effect of the procedure in FIG. 7, the location information deletion portion 42 of the LM 4 can receive the previous IPha information (IPha #1) assigned to the MN 1 from the MN 1 by way of the AR 2 to delete the previous IPha information stored in the location management table 41. And the LM 4 can register the new IPha information (IPha #2) newly assigned to the MN with the location management table 41 so as to avoid the duplicate management of the IPha information.

According to this procedure, the MN 1 can receive the address reassignment request on the expiration of the lease period of the IPha. Therefore, the MN 1 can use the valid IPha irrespective of the lease period of the IPha used by the MN 1. And the AR 2 can request the reacquisition of the address without managing the association between the MN 1 and the IPha. Furthermore, it is possible to uniquely manage the IPha information in the location information management table 41 by having the previous IPha information relayed by the AR 2 and received and deleted by the LM 4 based on the previous IPha information from the MN 1. It is no longer necessary for the AR 2 to manage the IPha assigned to the MN 1 by having the previous IPha information notified to the AR 2 by the MN 1.

### <2.5 IPha reacquisition procedure led by the NW (timer expiration on the LM)>

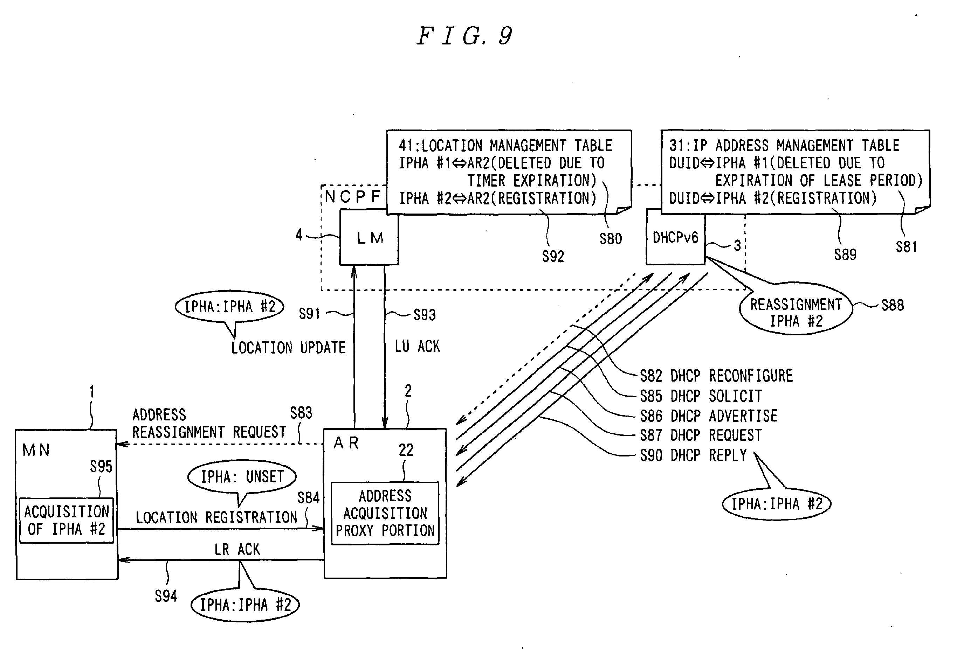

FIG. 9 shows the procedure in the case where the LM 4 avoids the duplicate management of the IPha information in the location management table 41 with the timer associated with the IPha information stored in the location management table 41. The previous IPha information held by the MN 1 is the IPha #1. Here, timing of the expiration of the lease period of the IPha #1 stored in the IP address management table 31 of the DHCPv6 server 3 is set identical with that of the timer associated with the IPha #1 stored in the location management table 41 of the LM 4.

First, when the LM 4 detects the expiration of the valid duration timed by the timer associated with the IPha #1, the location information deletion portion 42 deletes the location information including the IPha #1 stored in the location management table 41 (S80).

At the same time, the DHCPv6 server 3 detects the expiration of the lease period of the IPha #1 assigned to the MN 1. Thus, the address deletion portion 32 of the DHCPv6 server 3 deletes the IPha #1 stored in the IP address management table 31 (S81). In addition, the address reassignment request portion 34 of the DHCPv6 server 3 sends to the AR 2 the DHCP RECONFIGURE for requesting the MN 1 having the IPha #1 assigned thereto to acquire the new IPha (S82).

On receiving the DHCP RECONFIGURE from the DHCPv6 server 3, the AR 2 sends the address reassignment request instruction to the MN 1 (S83). On receiving the address reassignment request instruction from the AR 2, the MN 1 sends the LR including the IPha information (unset) to the AR 2 (S84). When the AR 2 receives the LR from the MN 1, the address acquisition necessity determination portion 21 determines that there is a need to acquire the IPha because the set value of the IPha information included in the LR is unset. Thereafter, the address acquisition proxy portion 22 performs the same IPha acquisition procedure as that in FIG. 7 (S85 to S90) so as to acquire the IPha #2.

The post-address-acquisition location registration portion 23 of the AR 2 sends the LU including the acquired IPha information (IPha #2) to the LM 4 (S91).

On receiving the LU from the AR 2, the LM 4 registers the IPha information (IPha #2) and the identifier of the AR 2 as the location information with the location management table 41 based on the IPha information included in the LU (S92). The LM 4 sends the LUAck to the AR 2 (S93). When the AR 2 receives the LUAck, the assigned address notification portion 24 sends the LRAck including the IPha #2 as the IPha information to the MN 1 (S94).

On receiving the LRAck from the AR 2, the MN 1 acquires the IPha #2 included in the LRAck and sets it to the MN 1 (S95).

As described above, it is possible to avoid the duplication with the newly assigned IPha #2 by having the location information including the IPha #1 deleted by the location information deletion portion 42 on the elapse of a predetermined time timed by the timer associated with the IPha #1 stored in the location management table 41 of the LM 4. It is possible to match the timing for deleting the IPha information with the timer of the LM 4 to that with the timer for managing the lease period on the DHCPv6 server 3 so as to avoid conflicting statuses as in FIGS. 7 and 8.

According to this method, the MN 1 can receive the address reassignment request on the expiration of the lease period of the IPha. Therefore, the MN 1 can use the valid IPha irrespective of the lease period of the IPha used by the MN 1. And the AR 2 can request the reacquisition of the address without managing the association between the MN 1 and the IPha. Furthermore, it is possible to uniquely manage the IPha information in the location information management table 41 managed by the LM 4 because the previous IPha information stored in the location management table 41 is deleted by an IPha management timer held by the LM 4.

### <2.6 IPha reacquisition procedure led by the MN (previous IPha deletion request of the DHCPv6 server)>

Next, a description will be given by referring to FIG. 10 as to the IPha reacquisition procedure led by the MN 1 in the case of resetting (changing) the IPha of the MN 1 after the MN 1 acquires the IPha. Here, the LM 4 avoids duplicately managing the IPha of the location management table 41 based on the previous IPha deletion request message from the DHCPv6 server 3. The previous IPha information held by the MN 1 is the IPha #1.

First, on receiving a trigger for resetting the IPha (S101), the MN 1 sends to AR 2 the LR of which IPha information set value is unset (S102). The address acquisition necessity determination portion 21 of the AR 2 determines that there is a need to acquire the IPha because the set value of the IPha information included in the LR received from the MN 1 is unset. The address acquisition proxy portion 22 performs the address acquisition procedure to the DHCPv6 server 3 (S103 to S111).

To be more precise, on receiving an address acquisition request (S105), the DHCPv6 server 3 newly assigns the IPha #2 (S106). And the address deletion portion 32 of the DHCPv6 server 3 deletes the previous IPha information (IPha #1) in the IP address management table 31. The DHCPv6 server 3 associates the DUID which is the terminal identifier of the MN 1 with the IPha #2 to register it with the IP address management table 31 (S107). In addition, the previous address deletion request portion 33 of the DHCPv6 server 3 sends the previous IPha deletion request message to the LM 4 (S108).

The location information deletion portion 42 of the LM 4 deletes the location information including the IPha #1 according to the received previous IPha deletion request message (S109). The LM 4 sends a previous IPha deletion request acknowledgement to the DHCPv6 server 3 (S110). The DHCPv6 server 3 sends the DHCP REPLY including the IPha #2 newly assigned (S111).

The address acquisition proxy portion 22 of the AR 2 receives the DHCP REPLY from the DHCPv6 server 3. The post-address-acquisition location registration portion 23 of the AR 2 generates the LU including the IPha #2 included in the DHCP REPLY and sends it to the LM 4 (S112). The LM 4 associates the IPha #2 included in the LU with the identifier of the AR 2 and registers it with the location management table 41 as the location information (S113). The procedure thereafter is the same as that in FIG. 7.

The address reacquisition led by the MN 1 described above is feasible without putting load on the radio section or changing a conventional location registration procedure. The location information deletion portion 42 of the LM 4 deletes the location information including the previous IPha information (IPha #1) in the location management table 41 according to the deletion request from the previous address deletion request portion 33 of the DHCPv6 server 3. Furthermore, the LM 4 registers the location information including the new IPha information (IPha #2) according to the LU from the AR 2. Therefore, it is possible to avoid managing the IPha information on the MN 1 duplicately in the location management table 41.

### <2.7 IPha reacquisition procedure led by the MN (previous IPha deletion request from the MN)>

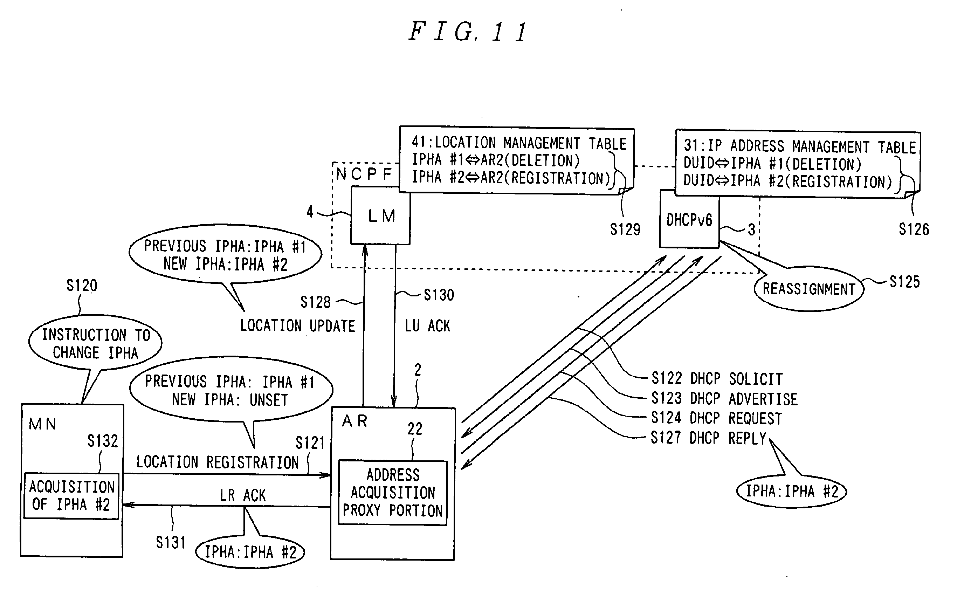

A description will be given by referring to FIG. 11 as to the IPha reacquisition procedure led by the MN 1 in the case of resetting (changing) the IPha of the MN 1 after acquiring the IPha. Here, the LM 4 avoids duplicately managing the IPha information on the MN 1 in the location management table 41 based on sending of the previous IPha information from the MN 1. The previous IPha information held by the MN 1 is the IPha #1.

First, on receiving the trigger for resetting the IPha (S120), the MN 1 sends to the AR2 the LR of which new IPha information set value is unset and previous IPha information is the IPha #1 (S121).

The address acquisition necessity determination portion 21 of the AR 2 determines that there is a need to acquire the IPha to be assigned to the MN 1 because, in the LR received from the MN 1, the set value of the new IPha is unset and the previous IPha information is the IPha #1. The address acquisition proxy portion 22 performs the address acquisition procedure to the DHCPv6 server 3 (S122 to S127). To be more precise, on receiving the address acquisition request in S124, the DHCPv6 server 3 newly assigned the IPha #2 (S125). And the address deletion portion 32 of the DHCPv6 server 3 deletes the previous IPha information (IPha #1) in the IP address management table 31. In addition, the DHCPv6 server 3 associates the DUID which is the terminal identifier of the MN 1 with the IPha #2 to register it with the IP address management table 31 (S126). The DHCPv6 server 3 sends the DHCP REPLY including the IPha #2 to the AR 2 (S127).

The address acquisition proxy portion 22 of the AR 2 receives the DHCP REPLY from the DHCPv6 server 3. The post-address-acquisition location registration portion 23 of the AR 2 generates the LR including the new IPha information (IPha #2) and the previous IPha information (IPha #1) and sends it to the LM 4 (S128).

The location information deletion portion 42 of the LM 4 deletes the location information including the IPha #1 from the location management table 41 based on the previous IPha information included in the received LU. The LM 4 associates the IPha #2 with the identifier of the AR 2 and registers it as the location information with the location management table 41 based on the new IPha information included in the LU (S129). The procedure thereafter is the same as that in FIG. 7, and so a duplicate description will be omitted.

Here, as with FIG. 10, the address reacquisition led by the MN 1 is feasible without putting load on the radio section or changing the conventional location registration procedure. The AR 2 sends the LU including the new IPha information and the previous IPha information to the LM 4 so that the LM 4 has the previous IPha information (IPha #1) stored in the location management table 41 deleted and the new IPha information (IPha #2) registered therewith. For this reason, it is possible to avoid the duplicate management of the IPha information on the MN 1 in the location management table 41.

### <2.8 IPha reacquisition procedure led by the MN (timer expiration of the LM)>

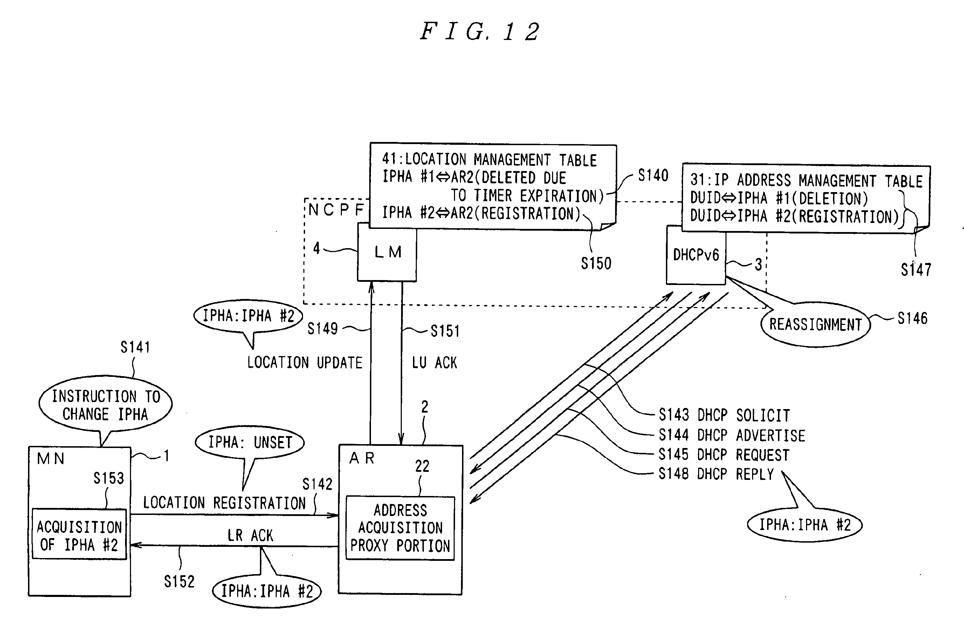

FIG. 12 shows that the duplicate management of the IPha information on the MN 1 in the location management table 41 of the LM 4 is avoided by means of the timer associated with the location information stored in the location management table 41. The previous IPha information held by the MN 1 is the IPha #1. Here, the timing of the expiration of the timer of the LM 4 is set to match with the timing for the MN 1 to receive the instruction to change the IPha.

The LM 4 detects the expiration of the period timed by the timer associated with the IPha #1 stored in the location management table 41. Thus, the location information deletion portion 42 deletes the location information including the IPha #1 stored in the location management table 41 (S140). The MN 1 receives the instruction to change the IPha in the same timing as this (S141). The procedure thereafter is the same as a flow of the procedure shown in FIG. 10 except the timing and method of the deletion of the IPha information in the location management table 41, and so a duplicate description will be omitted.

Thus, it is possible to match the timing of the deletion by the timer expiration in the step S140 to the timing of the IPha reacquisition request from the MN 1 in the step S141 so as to avoid the conflicting statuses as in FIGS. 10 and 11 and reassign the IPha. It is thinkable, as a method of matching, that a user notified of the timer expiration should input a change instruction to the MN 1 or use the timer of the MN 1 and match it to the timer of the LM 4 for instance. Thus, the location information including the IPha #1 is deleted by the expiration of the timer associated with the IPha information stored in the location management table 41, and so it is possible to avoid the duplicate management with the location information including the IPha #2.

### <2.9 Validity evaluation (valid case)>

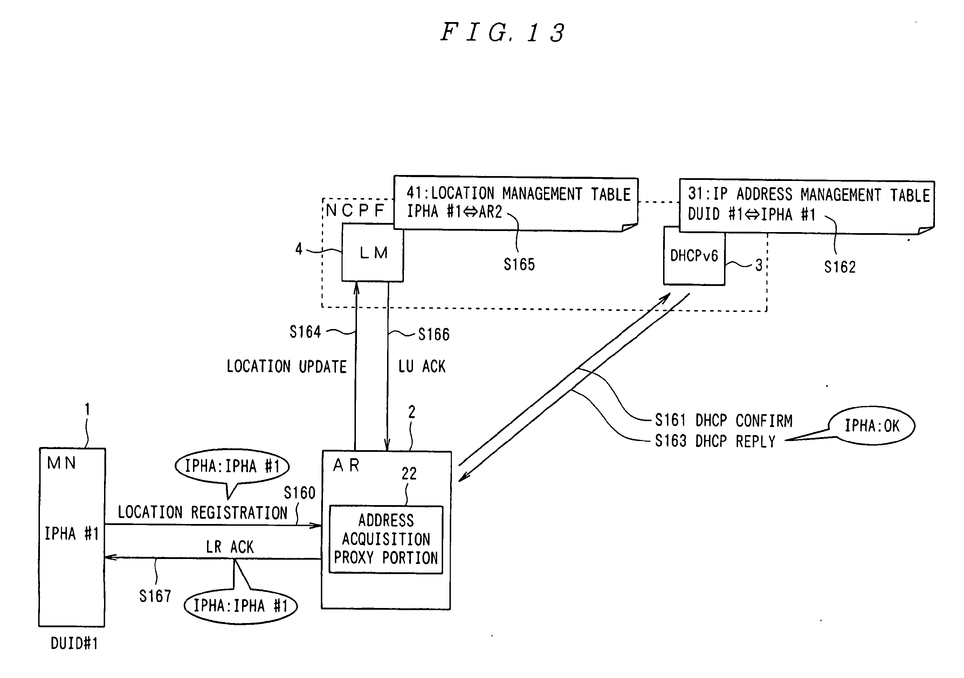

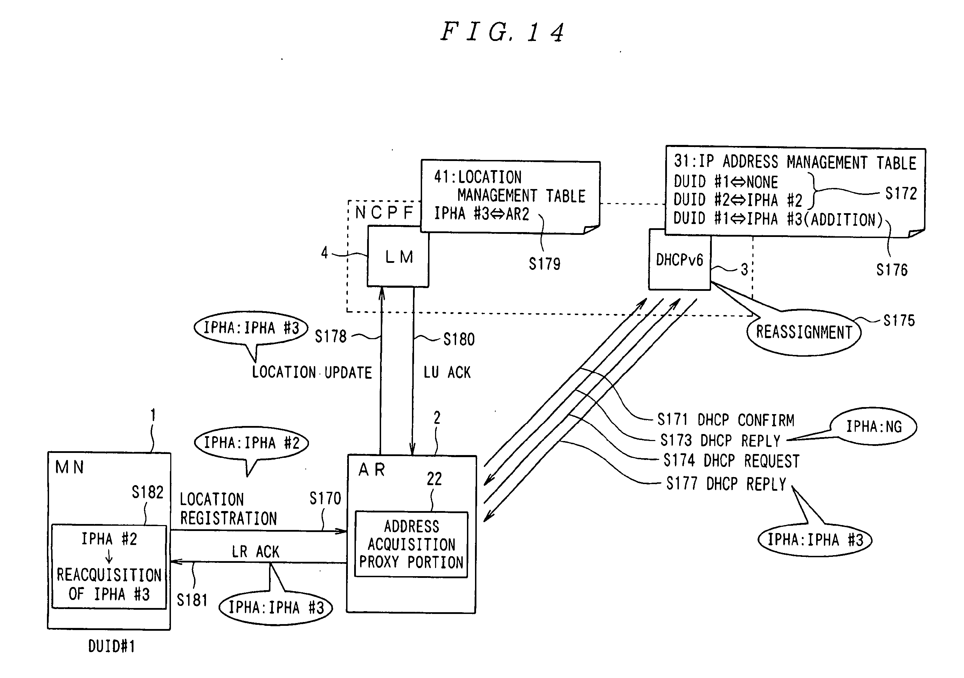

Furthermore, FIGS. 13 and 14 are used to describe that the present invention allows the validity of the IPha used by the MN 1 to be evaluated on the NW side during the location registration procedure.

A description will be given by using FIG. 13 as to an evaluation method in the case where the MN 1 is using the IPha #1 validly assigned. Here, a terminal identifier of the MN 1 is a DUID #1. The DUID #1 is associated with the IPha #1 and stored in the IP address management table 31 of the DHCPv6 server 3.

First, the MN 1 sends the LR including the IPha #1 to the AR 2 (S160). The address validity confirmation portion 25 of the AR 2 makes an inquiry to the DHCPv6 server 3 by a DHCP CONFIRM message including the DUID #1 and IPha #1 in order to confirm the validity of the IPha #1 included in the LR (S161).

When the DHCPv6 server 3 receives the DHCP CONFIRM message, the address validity evaluation portion 35 of the DHCPv6 server 3 matches it to the IP address management table 31 (S162). To be more precise, the address validity evaluation portion 35 determines whether or not the IPha #1 assigned to the MN 1 is assigned to another MN based on the IP address management table 31. Here, the IP address management table 31 has the DUID #1 associated with the IPha #1 and stored therein. Therefore, the address validity evaluation portion 35 makes an evaluation that the IPha #1 is the IPha validly assigned.

The DHCPv6 server 3 sends to the AR2 the DHCP REPLY for notifying that the IPha #1 is the IPha validly assigned (S163).

The address validity confirmation portion 25 of the AR 2 confirms that the IPha #1 is the IPha validly assigned. The AR 2 sends to the LM 4 the LU including the IPha #1 validly assigned (S164).

The LM 4 having received the LU associates the IPha #1 with the identifier of the AR 2 and registers it with the location management table 41 (S165) so as to send the LUAck to the AR 2 (S166). The AR 2 sends the LRAck including the IPha #1 to the MN 1 (S167). Thus, the MN 1 completes the location registration.

Thus, as the IPha #1 is valid, the location registration is performed after confirming the validity on the NW side.

### <2.10 Validity evaluation (invalid case)>

Next, a description will be given by using to FIG. 14 as to the evaluation method in the case where an invalid IPha is used, such as having no IPha assigned from the DHCPv6 server 3 or having the IPha assigned with its lease period expired. Here, the MN 1 uses the IPha #2 as an invalid address. The terminal identifier of the MN 1 is the DUID #1. The IP address management table 31 of the DHCPv6 server 3 has the DUID #2 associated with the IPha #2 and stored therein.

First, the MN 1 sends the LR including the IPha #2 to the AR2 (S170).

To confirm the validity of the IPha #1, the AR 2 makes an inquiry to the DHCPv6 server 3 by the DHCP CONFIRM message including the DUID #1 and IPha #2 (S171).

When the DHCPv6 server 3 receives the inquiry, the address validity evaluation portion 35 of the DHCPv6 server 3 matches it to the IP address management table 31 in order to evaluate the validity of the IPha #2 assigned to the MN 1 (S172). To be more precise, the address validity evaluation portion 35 determines whether or not the IPha #2 assigned to the MN 1 is assigned to another MN based on the IP address management table 31. Here, the IP address management table 31 has the IPha #2 associated with the DUID #2 and stored therein. It means that the other MN is using the IPha #2. For this reason, the address validity evaluation portion 35 makes an evaluation that the IPha #1 used by the MN 1 is invalid. The DHCPv6 server 3 sends to the AR2 the DHCP REPLY for notifying that the IPha #1 used by the MN 1 is invalid (S173).

On receiving the DHCP REPLY, the address validity confirmation portion 25 of the AR 2 confirms that it is invalid. For this reason, the address acquisition proxy portion 22 of the AR 2 sends the DHCP REQUEST in order to perform the address acquisition procedure to the DHCPv6 server 3 (S174).

The DHCPv6 server 3 newly assigns the IPha #3 to the MN 1 (S175). And the DHCPv6 server 3 adds the DUID #1 and the IPha #3 validly assigned to the IP address management table 31 (S176). The DHCPv6 server 3 sends the DHCP REPLY including the IPha #3 to the AR2 (S177).

The post-address-acquisition location registration portion 23 of the AR 2 sends the LU including the IPha #3 to the LM4 (S178).

On receiving the LU, the LM4 updates the location management table 41 (S179), and sends the LUAck to the AR2 (S180).

The assigned address notification portion 24 of the AR 2 sends the LRAck including the IPha #3 to the MN 1 (S181). Thus, the MN 1 has the valid IPha #3 set thereto, and the location registration is completed (S182).

Here, as the IPha #2 is invalid, the valid IPha is acquired after confirming the validity on the NW side, and the valid IPha is assigned to the MN 1 upon the location registration. Thus, the MN 1 can always use the valid IPha.

As described above, it is possible, by having the address acquisition proxy portion 22 in the AR 2, to fuse together the message between the MN 1 and the AR2 and the location registration procedure so as to curb the message amount between the MN 1 and the AR2. At the same time, it becomes possible to dynamically update the location management table 41 of the LM4. It is also possible, as regards the reassignment of the IPha, to always assign a unique IPha to the MN 1 whether it is led by the NW side or the MN side. Furthermore, it is also possible for an NW operator to evaluate the validity of the IPha used by the MN 1.

The present invention may be used in a field for curbing the message amount in the radio section and dynamically assigning the IPha to the mobile node while keeping consistency of the managed IPha.

## Claims

1. An address dynamic assignment system including an address management apparatus (3) for managing terminal identification address information assigned for the sake of uniquely identifying a mobile node (1) on a mobile communication network, a relay apparatus for relaying communication of the mobile node (1) and a location manager (4) for managing location information about the mobile node (1), **characterized in that** the relay apparatus has:
address acquisition necessity determination means (21) for, when receiving a location registration for requesting registration of the location information from the mobile node (1), determining whether or not there is a need to acquire the terminal identification address information to be assigned to the mobile node (1) based on address acquisition necessity information included in the location registration;
address acquisition proxy means (22) for acquiring the terminal identification address information from the address management apparatus (3) in the case where the address acquisition necessity determination means (21) determines that there is a need to acquire the terminal identification address information;
post-address-acquisition location registration means (23) for sending to the location manager a location update for registering a location including the terminal identification address information acquired by the address acquisition proxy means (22); and
assigned address notification means (24) for sending back to the mobile node (1) a location registration acknowledgement including the terminal identification address information acquired by the address acquisition proxy means (22).

2. The address dynamic assignment system according to claim 1, the relay apparatus further comprising:
address validity confirmation means (25) for sending a message for confirming validity of the terminal identification address information assigned to the mobile node (1) to the address management apparatus (3) managing the terminal identification address information, wherein:
in the case where the address validity confirmation means (25) confirms that the terminal identification address information about the mobile node (1) is not valid, the terminal identification address information to be assigned to the mobile node (1) is acquired.

3. An address dynamic assignment method for assigning terminal identification address information for uniquely identifying a mobile node (1) on a mobile communication network to the mobile node (1), **characterized by** comprising:
a request sending step in which the mobile node (1) sends a location registration including address assignment necessity information representing whether or not there is a need to assign the terminal identification address information to its own node;
an address acquisition necessity determination step in which a relay apparatus determines whether or not there is a need to acquire the terminal identification address information to be assigned to the mobile node (1) based on the address assignment necessity information included in the location registration received in the request sending step;
a location registration step in which, if determined that there is a need to acquire the terminal identification address information in the address acquisition necessity determination step, the relay apparatus sends a location update for registering the location including the acquired terminal identification address information to a location manager (4) for registering the location after acquiring the information, and if determined that there is no need to acquire the terminal identification address information, it sends the location update including the terminal identification address information currently assigned to the mobile node (1) to the location manager (4) without acquiring the terminal identification address information to be assigned to the mobile node (1); and
an assigned address notification step in which the relay apparatus sends back to the mobile node (1) a location registration acknowledgement including the terminal identification address information to be assigned to the mobile node (1) acquired in the location registration step.

## Patentansprüche

1. System zur dynamischen Adresszuweisung, das eine Adressmanagementvorrichtung (3), um Endgerätidentifizierungs-Adressinformationen, die zum eindeutigen Identifizieren eines mobilen Knotens (1) in einem Mobilkommunikationsnetz zugewiesen sind, zu managen, eine Weiterleitungsvorrichtung, um die Kommunikation des mobilen Knotens (1) weiterzuleiten, und einen Ortsmanager (4), um Ortsinformationen bezüglich des mobilen Knotens (1) zu managen, umfasst, **dadurch gekennzeichnet, dass** die Weiterleitungsvorrichtung umfasst:
Mittel (21) zum Bestimmen der Notwendigkeit einer Adresserfassung, um dann, wenn eine Ortsregistrierung empfangen wird, um die Registrierung der Ortsinformationen von dem mobilen Knoten (1) anzufordern, anhand von in der Ortsregistrierung enthaltenen Informationen bezüglich der Notwendigkeit einer Adresserfassung zu bestimmen, ob ein Bedarf an der Erfassung der Endgerätidentifizierungs-Adressinformationen, die dem mobilen Knoten (1) zugewiesen werden sollen, besteht oder nicht;
Adresserfassungs-Proxy-Mittel (22), um in dem Fall, in dem die Mittel (21) zum Bestimmen der Notwendigkeit einer Adresserfassung bestimmen, dass ein Bedarf an der Erfassung der Endgerätidentifizierungs-Adressinformationen besteht, die Endgerätidentifizierungs-Adressinformationen von der Adressmanagementvorrichtung (3) zu erfassen;
Mittel (23) zur Ortsregistrierung nach der Adresserfassung, um zu dem Ortsmanager eine Ortsaktualisierung zur Registrierung eines Ortes, die die von den Adresserfassungs-Proxy-Mitteln (22) erfassten Endgerätidentifizierungs-Adressinformationen enthält, zu senden; und
Mittel (24) zum Melden der zugewiesenen Adresse, um zu dem mobilen Knoten (1) eine Ortsregistrierungsquittierung zurückzusenden, die die von den Adresserfassungs-Proxy-Mitteln (22) erfassten Endgerätidentifizierungs-Adressinformationen enthält.

2. Dynamisches Adresszuweisungssystem nach Anspruch 1, wobei die Weiterleitungsvorrichtung ferner umfasst:
Adressgültigkeits-Bestätigungsmittel (25), um eine Nachricht für die Bestätigung der Gültigkeit der Endgerätidentifizierungs-Adressinformationen, die dem mobilen Knoten (1) zugewiesen sind, zu der Adressmanagementvorrichtung (3), die die Endgerätidentifizierungs-Adressinformationen managt, zu senden, wobei:
in dem Fall, in dem die Adressgültigkeits-Bestätigungsmittel (25) bestätigen, dass die Endgerätidentifizierungs-Adressinformationen bezüglich des mobilen Knotens (1) nicht gültig sind, die Endgerätidentifizierungs-Adressinformationen, die dem mobilen Knoten (1) zugewiesen werden sollen, erfasst werden.

3. Dynamisches Adresszuweisungsverfahren zum Zuweisen von Endgerätidentifzierungs-Adressinformationen, die einen mobilen Knoten (1) in einem Mobilkommunikationsnetz eindeutig identifizieren, zu dem mobilen Knoten (1), **gekennzeichnet durch**:
einen Anforderungssendeschritt, in dem der mobile Knoten (1) eine Ortsregistrierung, die Informationen bezüglich der Notwendigkeit einer Adresszuweisung enthält, die angeben, ob ein Bedarf an der Zuweisung der Endgerätidentifizierungs-Adressinformationen besteht, zu seinem eigenen Knoten sendet;
einen Schritt zum Bestimmen der Notwendigkeit einer Adresserfassung, in dem eine Weiterleitungsvorrichtung anhand der Informationen bezüglich der Notwendigkeit einer Adresszuweisung, die in der in dem Anforderungssendeschritt empfangenen Ortsregistrierung enthalten sind, bestimmt, ob ein Bedarf zum Erfassen der dem mobilen Knoten (1) zuzuweisenden Endgerätidentifizierungs-Adressinformationen besteht oder nicht;
einen Ortsregistrierungsschritt, in dem dann, wenn festgestellt wird, dass ein Bedarf an der Erfassung der Endgerätidentifizierungs-Adressinformationen in dem Schritt zum Bestimmen der Notwendigkeit einer Adresserfassung besteht, die Weiterleitungsvorrichtung eine Ortsaktualisierung zum Registrieren des Ortes, die die erfassten Endgerätidentifizierungs-Adressinformationen enthält, zu dem Ortsmanager (4) sendet, um den Ort zu registrieren, nachdem die Informationen erfasst worden sind, und in dem, wenn festgestellt wird, dass kein Bedarf an der Erfassung der Endgerätidentifizierungs-Adressinformationen besteht, die Ortsaktualisierung, die die Endgerätidentifizierungs-Adressinformationen enthält, die momentan dem mobilen Knoten (1) zugewiesen sind, zu dem Ortsmanager (4) gesendet wird, ohne dass die dem mobilen Knoten (1) zuzuweisenden Endgerätidentifizierungs-Adressinformationen erfasst werden; und
einen Schritt zum Melden der zugewiesenen Adresse, in dem die Weiterleitungsvorrichtung zu dem mobilen Knoten (1) eine Ortsregistrierungsquittierung zurücksendet, die die Endgerätidentifizierungs-Adressinformationen enthält, die dem mobilen Knoten (1) zugewiesen werden sollen und in dem Ortsregistrierungsschritt erfasst werden.

## Revendications

1. Système d'attribution dynamique d'adresse incluant un appareil de gestion d'adresse (3) pour gérer des informations concernant l'adresse d'identification terminale attribuée dans le but d'identifier de façon unique un noeud mobile (1) sur un réseau de communications mobile, un appareil relais pour relayer les communications du noeud mobile (1), et un gestionnaire d'emplacement (4) pour gérer les informations d'emplacement autour du noeud mobile (1), **caractérisé en ce que** l'appareil relais comprend:
des moyens de détermination de nécessité d'acquisition d'adresse (21) pour déterminer, lorsqu'ils reçoivent un enregistrement d'emplacement pour requérir l'enregistrement de l'information d'emplacement depuis le noeud mobile (1), s'il existe ou non un besoin d'acquérir des informations d'adresse d'identification terminale à attribuer au noeud mobile (1) en se basant sur les informations de nécessité d'acquisition d'adresse inclues dans l'enregistrement d'emplacement ;
des moyens proxy d'acquisition d'adresse (22) pour acquérir des informations d'adresse d'identification terminale depuis l'appareil de gestion d'adresse (3) dans le cas où les moyens de détermination de nécessité d'acquisition d'adresse (21) déterminent qu'il existe un besoin pour acquérir les informations d'adresse d'identification terminale ;
des moyens d'enregistrement d'emplacement (23) faisant suite à l'acquisition d'adresse pour envoyer au gestionnaire d'emplacement une mise à jour d'emplacement pour enregistrer un emplacement, qui inclut les informations d'adresse identification terminale acquise par les moyens proxy d'acquisition d'adresse (22) ; et
des moyens de notification d'adresse attribuée (24) pour renvoyer au noeud mobile (1) un accusé de réception d'enregistrement d'emplacement qui inclut les informations d'adresse d'identification terminale acquises par les moyens proxy d'acquisition d'adresse (22).

2. Système d'attribution dynamique d'adresse selon la revendication 1, dans lequel l'appareil relais comprend encore :
des moyens de confirmation de validité d'adresse (25) pour envoyer un message afin de confirmer la validité des informations d'adresse d'identification terminale attribuées au noeud mobile (1) vers l'appareil de gestion d'adresse (3) qui gère les informations d'adresse d'identification terminale, dans lequel :
dans le cas où les moyens de confirmation de validité d'adresse (25) confirment que les informations d'adresse d'identification terminale autour du noeud mobile (1) ne sont pas valides, les informations d'adresse identification terminale à attribuer au noeud mobile (1) sont acquises.

3. Procédé d'attribution dynamique d'adresse pour attribuer des informations d'adresse d'identification terminale pour identifier de façon unique un noeud mobile (1) sur un réseau de communications mobile vers le noeud mobile (1), **caractérisé en ce qu'**il comprend :
une étape d'envoi de requête dans laquelle le noeud mobile (1) envoie un enregistrement d'emplacement incluant des informations de nécessité d'attribution d'adresse représentant s'il y a ou non besoin d'attribuer les informations d'adresse d'identification terminale à son propre noeud ;
une étape de détermination de nécessité d'acquisition d'adresse dans laquelle un appareil relais détermine s'il y a ou non besoin d'acquérir les informations d'adresse d'identification terminale à attribuer au noeud mobile (1) en se basant sur les informations de nécessité d'attribution d'adresse incluses dans l'enregistrement d'emplacement reçu dans l'étape d'envoi de requête ;
une étape d'enregistrement d'emplacement dans laquelle, si l'on a déterminé qu'il y a besoin d'acquérir les informations d'adresse d'identification terminale dans l'étape de détermination de nécessité d'acquisition d'adresse, l'appareil relais envoie une mise à jour d'emplacement pour enregistrer l'emplacement, qui inclut les informations d'adresse d'identification terminale acquises vers un gestionnaire d'emplacement (4) pour enregistrer l'emplacement après avoir acquis les informations, et si l'on détermine qu'il n'y a pas besoin d'acquérir les informations d'adresse d'identification terminale, il envoie la mise à jour d'emplacement incluant les informations d'adresse d'identification terminale actuellement attribuées au noeud mobile (1) vers le gestionnaire d'emplacement (4) sans acquérir les informations d'adresse d'identification terminale à attribuer au noeud mobile (1) ; et
une étape de notification d'adresse attribuée dans laquelle l'appareil relais envoie en retour au noeud mobile (1) un accusé de réception d'enregistrement d'emplacement qui inclut les informations d'adresse d'identification terminale à attribuer au noeud mobile (1) acquises dans l'étape d'enregistrement d'emplacement.
